# EUROPÄISCHE PATENTSCHRIFT

(11) **EP 3 590 802 B1**
(45) Veröffentlichungstag und Bekanntmachung des Hinweises auf die Patenterteilung: **09.02.2022**
(21) Anmeldenummer: 19184367.1
(22) Anmeldetag: 04.07.2019
(51) Int. Cl.: B62K 19/40, B62H 1/02

(54) **FAHRRAD MIT EINEM FAHRRADSTÄNDER UND AUSFALLENDE EINES FAHRRADRAHMENS**
BICYCLE WITH KICKSTAND AND DROPOUT OF A BICYCLE FRAME
VÉLO AVEC SUPPORT DE BICYCLETTE ET SOCLE INTÉGRÉ AU CADRE

(30) Priorität: 04.07.2018 DE 202018103821 U
(43) Veröffentlichungstag der Anmeldung: 08.01.2020
(73) Patentinhaber: Hebie GmbH & Co. KG, 33617 Bielefeld (DE)
(72) Erfinder: Ronge, Peter, 48145 Münster (DE)
(74) Vertreter: Habbel, Ludwig

(56) Entgegenhaltungen:
- EP-A1- 2 384 957
- US-A1- 2008 143 074

## Beschreibung

Die Erfindung betrifft einen Fahrradrahmen nach dem Oberbegriff des Anspruchs 1.

Aus der EP 2 384 957 A1 ist ein Fahrradrahmen bekannt, der den am nächsten kommenden Stand der Technik bildet. Zwei schräg zueinander stehende, jeweils geradlinige Flächen eines am Fahrradrahmen vorgesehenen Sockels bilden Anlageflächen, denen ein federbelastetes Druckstück einer Stütze des Fahrradständers in entweder der Standstellung oder der Fahrstellung der Stütze anliegt.

Aus der US 2008 0143074 A1 ist es bekannt, einen Fahrradständer am Hinterbau-Ausfallende eines Fahrradrahmens zu montieren, wobei in an sich bekannter Weise beide Elemente des Fahrradständers, nämlich der Sockel und die daran schwenkbeweglich gelagerte Stütze, am Fahrradrahmen montiert werden.

Der Erfindung liegt die Aufgabe zugrunde, einen gattungsgemäßen Fahrradrahmen dahingehend zu verbessern, dass dieser eine möglichst wirtschaftliche Herstellung des Fahrrads unterstützt.

Diese Aufgabe wird durch einen Fahrradrahmen nach Anspruch 1 gelöst sowie durch ein Ausfallende nach Anspruch 11.

Vorteilhafte Ausgestaltungen sind in den Unteransprüchen beschrieben.

Die Erfindung schlägt mit anderen Worten vor, dass der Sockel als Teil eines Hinterbau-Ausfallendes des Fahrradrahmens ausgestaltet ist, welches kurz lediglich als Ausfallende bezeichnet wird. Der Fahrradrahmen besteht typischerweise aus einer Vielzahl von Rohren, während jedoch die Ausfallenden typischerweise als Blechzuschnitte aus einem Plattenmaterial hergestellt werden, beispielsweise durch Stanz-, Fräs- oder Laserschneidvorgänge. Daher kann die Führungskontur im Sockel verwirklicht werden, ohne ein zusätzliches Bauteil schaffen zu müssen. Dies ist nicht nur hinsichtlich der Anzahl unterschiedlicher Teile vorteilhaft, sondern erfordert auch keinen zusätzlichen Montageschritt. Vielmehr wird während der Herstellung des Fahrradrahmens durch die ohnehin erforderliche Montage des Ausfallendes gleichzeitig auch der Sockel des Fahrradständers montiert.

Als weiterer vorteilhafter Effekt ergibt sich, dass bei Fahrrädern, bei denen kein Fahrradständer montiert werden soll, die Integration des Sockels in das Ausfallende kaum störende Überstände schafft, verglichen mit einem Sockel, der beispielsweise an einer Kettenstrebe des Fahrradrahmens angeordnet ist. Dies betrifft einerseits die ästhetische, ggf. als störend empfundene Wirkung, die der ungenutzte Sockel als Vorsprung bzw. Überstand aufweisen kann, andererseits aber auch den Umstand, dass an dem ungenutzten Vorsprung Körperteile, Kleidung oder dergleichen hängen bleiben können. Durch die Integration in das Ausfallende wird der Sockel möglichst weit weg beispielsweise von dem Kreis verlagert, auf dem die Pedalen bewegt werden, und somit möglichst weit weg von Füßen, Schnürsenkeln und Hosenbeinen einer das Fahrrad benutzenden Person.

Vorteilhaft kann das Ausfallende aus einem abgewinkelten Plattenmaterial bestehen. Hierdurch wird ein erster Abschnitt des Ausfallendes geschaffen, der beispielsweise exakt senkrecht ausgerichtet sein kann und zur Aufnahme der Hinterachse dient. Ein zweiter, demgegenüber abgewinkelter Abschnitt kann nach unten und schräg nach außen abgewinkelt sein und die Führungskontur aufweisen. Durch die Abwinklung wird bewirkt, dass die Stütze bei ihrer Schwenkbewegung aus der Fahrstellung in die Standstellung nach außen abgespreizt wird und so zusammen mit den beiden Laufrädern eine möglichst große, durch drei Aufstandspunkte definierte Stellfläche für das Fahrrad schafft, was die Standsicherheit des Fahrrades positiv beeinflusst.

Vorteilhaft kann vorgesehen sein, in der Führungskontur für die beiden Endstellungen der Stütze zwei Mulden anzuordnen, in welche jeweils das Druckstück der Stütze eintauchen kann, wenn die Stütze in ihre jeweilige Standstellung oder Fahrstellung geschwenkt worden ist. Beide Mulden werden jeweils durch zwei konisch zueinander verlaufende Ränder begrenzt. Jeweils der Rand, der im Verlauf der Führungskontur der jeweils anderen Mulde näher benachbart ist, wird als Innenrand bezeichnet, und der jeweils andere Rand einer Mulde, der sich dementsprechend an einem Ende der Führungskontur befindet, wird als Außenrand bezeichnet.

Die beiden Außenränder bilden bei dieser vorteilhaften Ausgestaltung jeweils einen Anschlag, der die Schwenkbewegung der Stütze begrenzt. Eine klar definierte Stellung der Stütze in ihrer jeweiligen Endstellung wird dadurch erreicht, dass der Anschlag im Wesentlichen parallel zur Bewegungsrichtung des Druckstücks verläuft, also im Wesentlichen quer zur bogenförmigen Schwenkrichtung der Stütze.

Weiterhin ist bei dieser vorteilhaften Ausgestaltung vorgesehen, dass das Druckstück die jeweilige Mulde in der Art ausfüllt, dass es den beiden Rändern der Mulde anliegt. Da die beiden Ränder einer Mulde konisch zueinander verlaufen, wird das Druckstück, von der Federkraft unterstützt, stets so weit wie möglich in die Mulde und in seinen dementsprechend konischen Sitz hinein gedrückt, so dass es spielfrei in der Mulde gehalten ist. Hierdurch wird die Stütze spielfrei in ihrer jeweiligen Endstellung gehalten. Für die Standstellung bedeutet dies eine besonders hohe Standsicherheit des Fahrrades, und für die Fahrstellung bedeutet dies eine klapperfreie Halterung der Stütze auch bei einer Fahrt über unebenen Grund.

Vorteilhaft kann die Bewegungsrichtung des Druckstücks zur Schwenkachse versetzt verlaufen. Die Verlängerung der Bewegungsbahn, auf welcher die Mittelachse des Druckstücks durch Federkraft unterstützt oder entgegen der Federrichtung läuft, kreuzt also nicht die Schwenkachse, sondern verläuft an der Schwenkachse vorbei. Hierdurch wird eine möglichst kompakte Ausgestaltung des Fahrradständers im Bereich des Sockels und der Schwenkachse unterstützt. Wenn der Fahrradständer im Bereich der hinteren Kettenstrebe oder Hinterradnabe am Fahrradrahmen vorgesehen ist, wirkt sich diese kompakte Ausgestaltung einerseits vorteilhaft für die Fußfreiheit einer Rad fahrenden Person aus, da beim Pedalieren Kollisionen der Ferse mit der Stütze des Fahrradständers vermieden werden können.

Insbesondere wenn vorteilhaft dieser genannte Versatz in der Art verwirklicht ist, dass die Bewegungsrichtung des Druckstücks zur Schwenkachse nach unten versetzt ist, wenn sich die Stütze in ihrer Fahrstellung befindet, wirkt sich dies vorteilhaft auf die konstruktiven Freiheitsgrade aus, da im Bereich der Hinterradnabe ein größerer Bauraum für Antriebs- oder Bremskomponenten zur Verfügung steht, beispielsweise für eine elektrische Betätigung einer Gangschaltung.

Die Stütze kann in drei Abschnitte unterteilt werden: in einen Fuß, mit dem sie auf dem Boden aufsteht, in ein Bein, welches den größten Teil der Länge der Stütze ausmacht, und in einen Kopf, mit dem die Stütze an den Sockel anschließt, und mit dem sie an der Schwenkachse schwenkbar gelagert ist.

Vorteilhaft kann der Sockel als Blechzuschnitt ausgestaltet sein und von einem Kopf der Stütze umgriffen werden, indem der Kopf eine mittlere Aussparung aufweist und dementsprechend sich gabelartig beiderseits von dem Sockel erstreckt. Insbesondere wenn der Sockel als integraler Bestandteil des Fahrradrahmens vorgesehen ist, wird so eine möglichst schmale und unauffällige Ausgestaltung des Sockels für den Fall geschaffen, dass das Fahrrad nicht mit einem Fahrradständer ausgestattet werden soll und dementsprechend keine Stütze an dem Sockel montiert wird.

Vorteilhaft kann die auf das Druckstück einwirkende Feder als innenliegende Feder ausgestaltet sein, so dass sie vor äußeren Einwirkungen und den damit einhergehenden eventuellen Funktionsbeeinträchtigungen optimal geschützt ist. Die Feder kann vorteilhaft im Kopf der Stütze angeordnet sein, denn während das Bein häufig als Rohrabschnitt ausgestaltet ist, ist der Kopf eines Fahrradständers häufig als separat hergestelltes Druckguss- oder Spritzgussbauteil hergestellt, so dass problemlos die Möglichkeit besteht, in einem solchen Bauteil Bereiche zu schaffen, an denen die Feder geführt oder abgestützt ist.

Vorteilhaft kann die auf das Druckstück einwirkende Feder als Wendelfeder ausgestaltet sein. Ihre Längsachse bzw. Mittelachse bestimmt die Wirkungsrichtung der Feder und definiert damit die Bewegungsrichtung des Druckstücks. Die Ausgestaltung als Wendelfeder ermöglicht eine einfache Integration in die längliche Formgebung einer Stütze.

Das Druckstück kann vorteilhaft eine dachförmige Kuppe aufweisen, mit der es der Führungskontur entlang der Schwenkbewegung der Stütze anliegt. Auch wenn die dachförmige Kuppe vorzugsweise stark verrundet ist, ergibt sich eine vergleichsweise geringe Kontaktfläche zwischen dem Druckstück und der Führungskontur und damit ein geringer Widerstand und dementsprechend geringer Kraftaufwand, um die Stütze relativ zum Sockel zwischen ihren beiden Endstellungen schwenken zu können.

Zusätzlich zu einer solchen dachförmigen Kuppe weist das Druckstück zwei Anschlagflächen auf, wobei es mit jeweils einer dieser Anschlagflächen einem Anschlag anlegt, wenn sich die Stütze in ihren beiden Endstellungen befindet. Im Unterschied zu der vergleichsweise kleinen Kontaktfläche der Kuppe wird eine vergleichsweise große Kontaktfläche der Anschlagflächen mit der Führungskontur, nämlich mit deren jeweiligem Anschlag ermöglicht, so dass die Stütze in ihrer jeweiligen Endstellung zuverlässig festgelegt und gehalten werden kann.

Vorteilhaft kann vorgesehen sein, dass das Ausfallende zwei Teile aufweist, von denen eines die Führungskontur aufweist. Die Ausfallenden weisen üblicherweise mehrere Anschlussstellen auf, die beispielsweise als Durchgangsbohrungen ausgestaltet sein können. Dementsprechend kann das die Führungskontur aufweisende Teil so ausgestaltet sein, dass es an derartige Anschlussstellen anschließbar ist. Auf diese Weise kann ein Ausfallende modular aus unterschiedlichen Komponenten zusammengesetzt werden: ein Grundelement des Ausfallendes ist stets gleich. Es schließt einerseits an die Sitz-und Kettenstreben an und weist andererseits eine Aufnahme für die Hinterachse auf. Für Fahrräder, die beispielsweise keinen Fahrradständer, kein Hinterrad-Schutzblech oder keinen Hinterrad-Gepäckträger aufweisen, kann dieses Grundelement den einzigen Bestandteil des Ausfallendes bilden. Für Fahrräder, die jedoch mit den erwähnten Komponenten ausgestattet werden sollen, wird das Grundelement des Ausfallendes mit einem zweiten Teil kombiniert, beispielsweise verschweißt, wobei dieses zweite Teil die Anschlussstellen für ein Schutzblech und / oder einen Gepäckträger und / oder die Führungskontur des vorschlagsgemäßen Fahrradständers aufweisen kann.

Ein Ausführungsbeispiel eines vorschlagsgemäßen Fahrradrahmens wird anhand der rein schematischen Darstellungen nachfolgend näher erläutert, in denen einige Bauteile transparent dargestellt sind, um einen Blick auf dahinter liegende andere Bauteile zu ermöglichen. Dabei zeigt
- Fig. 1: einen nur teilweise dargestellten Fahrradrahmen mit einem Fahrradständer, wobei sich die Stütze des Fahrradständers in ihrer Standstellung befindet,
- Fig. 2: den Bereich um die Schwenkachse des Fahrradständers von Fig. 1 in gegenüber Fig. 1 vergrößertem Maßstab,
- Fig. 3: in einer Ansicht ähnlich Fig. 2 den Bereich um die Schwenkachse, wobei sich die Stütze in ihrer Fahrstellung befindet,
- Fig. 4: eine Seitensicht des Druckstücks, und
- Fig. 5: eine Ansicht auf die Unterseite des Druckstücks, vom Fuß der Stütze aus gesehen.

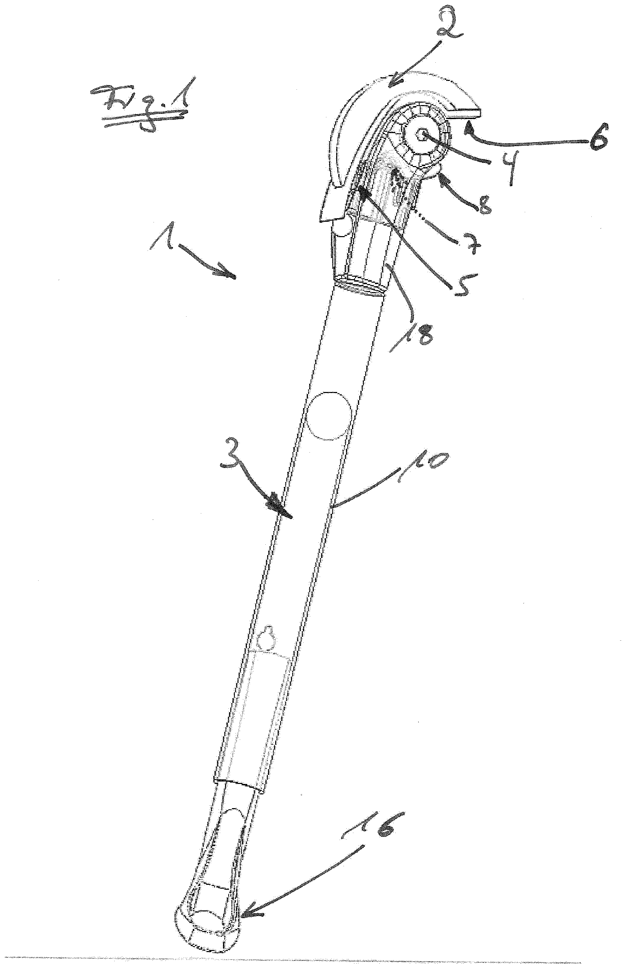

Fig. 1 zeigt eine perspektivische Ansicht auf einen Fahrradständer 1. Dieser weist einen rein schematisch angedeuteten Sockel 2 auf, der als integraler Bestandteil eines Fahrradrahmens ausgestaltet ist, nämlich als Bereich eines Ausfallendes. Bei dem dargestellten Ausführungsbeispiel ist der Sockel 2 Teil einer Platte, die als Ausfallende des Fahrradrahmens ausgestaltet ist. Diese Platte ist als Stanzteil oder als Laserzuschnitt aus einem Blech in der für ein Ausfallende üblichen Blechstärke hergestellt.

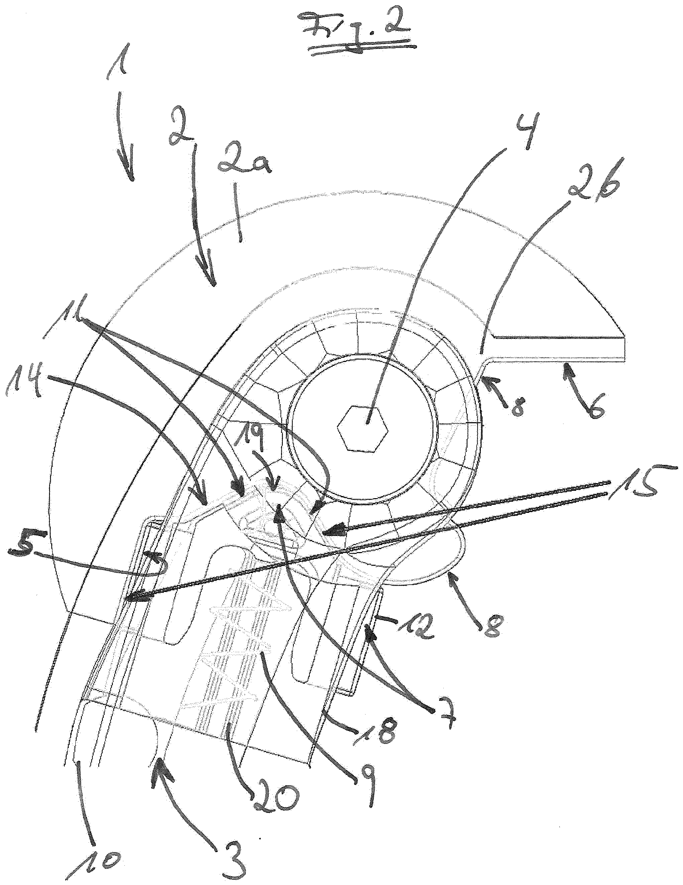

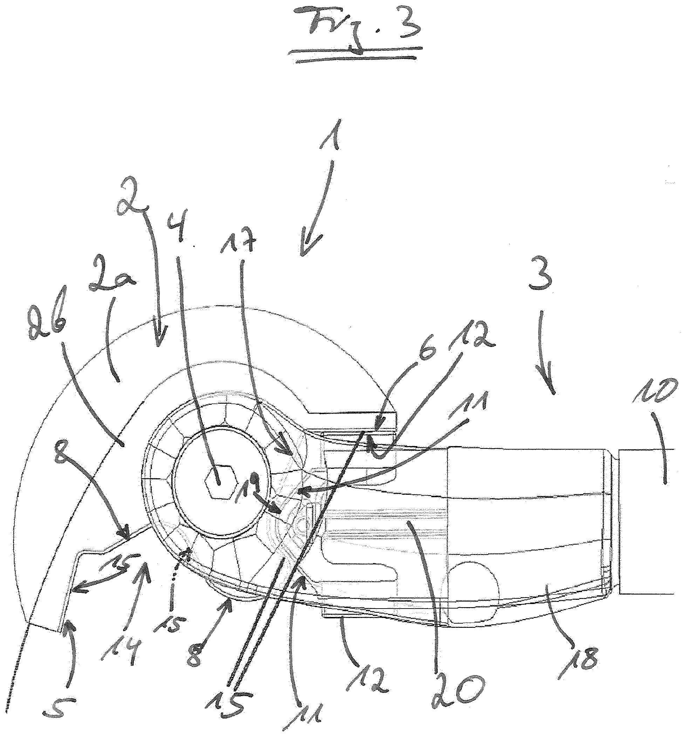

Die Fig. 2 und 3 zeigen, dass die Platte bzw. das Ausfallende einen ersten Abschnitt 2a aufweist, der in einer ersten, aufrechten Ebene verläuft, nämlich bei dem dargestellten Ausführungsbeispiel in einer exakt senkrechten Ebene. Das gegenüberliegende zweite Ausfallende am Fahrradrahmen ist parallel dazu ebenfalls senkrecht ausgerichtet, und in dem senkrechten Abschnitt 2a sowie dem gegenüberliegenden Ausfallende ist die Hinterachse des Fahrrads gehalten. Das Ausfallende weist einen zweiten Abschnitt 2b auf, welcher in einer zweiten Ebene verläuft, die zu der ersten, senkrechten Ebene schräg nach unten und außen abgewinkelt ist. Hierdurch wird sichergestellt, dass ein Fuß 16 des Fahrradständers 1 in der Standstellung seitlich neben dem Fahrradrahmen auf dem Boden aufsteht und so dem Fahrrad einen sicheren Stand verleiht.

Abweichend von dem dargestellten Ausführungsbeispiel kann der Sockel 2 eine Kontaktfläche aufweisen, mit welcher er an einen Fahrradrahmen, beispielsweise an eine Kettenstrebe, angeschweißt werden kann. Die gebogen verlaufende Formgebung an der Oberkante des Sockels 2 ist eine rein schematisch angedeutete Begrenzung des senkrechten Abschnitts 2a und steht bei dem dargestellten Ausführungsbeispiel stellvertretend für die genannten und auch andere denkbare Ausgestaltungen des Sockels 2.

Während der Sockel 2 ortsfest am Fahrradrahmen verbleibt, ist eine Stütze 3 des Fahrradständers 1 um eine Schwenkachse 4 beweglich gelagert. Die Stütze 3 ist teleskopierbar ausgestaltet, so dass sie an unterschiedliche Fahrradrahmen angepasst werden kann. Die in Fig. 1 ersichtliche Standstellung stellt eine vordere Endstellung der Stütze 3 dar, in welcher die Stütze 3 einem vorderen Anschlag 5 des Sockels 2 anliegt. Aus dieser vorderen Endstellung kann die Stütze 3 um die Schwenkachse 4 nach hinten geschwenkt werden, bis sie eine liegende Fahrstellung einnimmt und dabei einem hinteren Anschlag 6 des Sockels 3 anliegt. Ein Druckstück 7 der Stütze 3 läuft während dieser Schwenkbewegung an einer Führungskontur 8 des Sockels 2 entlang, wobei die Führungskontur an ihren beiden Enden die beiden Anschläge 5 und 6 aufweist.

Fig. 2 zeigt den Bereich um die Schwenkachse 4 herum in einem größeren Maßstab als Fig. 1 und in einer Blickrichtung achsparallel zur Schwenkachse 4. Die Stütze 3 weist an ihrem oberen, der Schwenkachse 4 nahen Ende einen Kopf 18 auf, der den aus einer Platte gebildeten Sockel 2 gabelartig beidseitig umgreift und auch auf diesen beiden Seiten die Schwenkachse 4 jeweils ringförmig umschließt. In dem Kopf 18 ist das Druckstück 7 angeordnet, welches durch eine schematisch angedeutete Wendelfeder 9 in Richtung zur Schwenkachse 4 und damit zur Anlage an der Führungskontur 8 gedrückt wird. Wie Fig. 2 zeigt, verläuft dabei die Wirkungslinie der Wendelfeder 9, also deren gedachte Mittelachse, nicht radial auf die Schwenkachse 4 zu, sondern im Abstand an der Schwenkachse 4 vorbei, und zwar in Fahrtrichtung des Fahrrads vor der Schwenkachse 4.

Zur Anlage an der Führungskontur 8 weist das Druckstück 7 eine stark verrundet ausgestaltete Kuppe 19 mit zwei Flanken 11 auf, die annähernd A-förmig angeordnet sind und bei dem dargestellten Ausführungsbeispiel in einem Winkel von annähernd 90° zueinander stehen. Unterhalb der Kuppe 19, also näher zum Fuß 16 der Stütze 3 hin, weist das Druckstück 7 zwei äußere Anschlagflächen 12 auf, die in den beiden Endstellungen der Stütze 3 den beiden Anschlägen 5 und 6 anliegen. Zur Führung der Wendelfeder 9 weist das Druckstück 7 einen Dorn 20 auf, wobei sich die Wendelfeder 9 mit ihrem unteren, also von der Schwenkachse 4 entfernten Ende am Kopf 18 oder innerhalb des Beins 10 abstützt.

In der aus Fig. 2 ersichtlichen Standstellung taucht das Druckstück 7 in eine als Standmulde 14 bezeichnete Mulde der Führungskontur 8 ein, wobei die Standmulde 14 durch zwei Kontaktflächen 15 begrenzt ist und sich zwischen diesen beiden Kontaktflächen 15 erstreckt. Die eine Kontaktfläche 15 wird durch den vorderen Anschlag 5 gebildet, ihr liegt eine Anschlagfläche 12 des Druckstücks 7 an. Der anderen Kontaktfläche 15 liegt die rechts dargestellte Flanke 11 des Druckstücks 7 an, während zwischen der links dargestellten Flanke 11 und der Führungskontur 8 innerhalb der Standmulde 14 ein Spalt verbleibt.

Dadurch, dass die beiden Kontaktflächen 15 schräg zueinander stehen, wird die Standmulde 14 durch zwei konisch verlaufende Ränder begrenzt. Der Anschlag 5 stellt dabei einen Außenrand der Standmulde 14 dar, weil er ein Ende der gesamten Führungskontur 8 bildet, während die andere, rechts dargestellte Kontaktfläche 15 als Innenrand bezeichnet ist. Bei auftretendem Verschleiß am Druckstück 7 und / oder an der Führungskontur 8, oder bei Fertigungstoleranzen bewirkt die Wendelfeder 9, dass das Druckstück 7 stets so weit wie möglich und dementsprechend spielfrei in diesen konischen Sitz gedrückt wird, den die Standmulde 14 für das Druckstück 7 schafft.

Dies wird dadurch ermöglicht, dass der Anschlag 5 in der Bewegungsrichtung des Druckstücks 7 verläuft, so dass das Druckstück 7 entlang des Anschlags 5 gleiten kann, und zwar verschleißabhängig oder toleranzabhängig jeweils so weit, bis die rechte Flanke 11 des Druckstücks 7 an der rechten Kontaktfläche 15 der Führungskontur 8 anliegt. Der Anschlag 5 verläuft im Wesentlichen parallel zur Längsachse der Stütze 3 bzw. zur Längsachse der Wendelfeder 9. Damit verläuft der Anschlag 5 im Wesentlichen quer zur Bewegungsrichtung, entlang welcher die Stütze 3 um die Schwenkachse 4 beweglich ist. Daher stellt der Anschlag 5 eine wirkungsvolle Begrenzung der Beweglichkeit für die Stütze 3 dar und verleiht dem mittels des Fahrradständers 1 abgestellten Fahrrad eine hohe Standsicherheit.

Die in Fig. 2 dargestellte Standstellung stellt eine der beiden Endstellungen der Stütze 3 dar. Aus der Standstellung kann die Stütze 3 entgegen dem Uhrzeigersinn um die Schwenkachse 4 geschwenkt werden. Dabei folgt das Druckstück 7 mit seiner Kuppe 19 der Führungskontur 8. Da die Führungskontur 8 im Anschluss an die Standmulde 14 in einem sich vergrößernden Abstand von der Schwenkachse 4 verläuft, muss das Druckstück 7 entgegen der Wirkung der Wendelfeder 9 in Richtung zum Fuß 16 der Stütze 3 gedrückt werden, um der Führungskontur 8 folgen zu können. Der dadurch geschaffene Widerstand, der die Schwenkbewegung der Stütze 3 zu behindern bestrebt ist, kann vom Benutzer des Fahrrades problemlos überwunden werden, stellt andererseits jedoch einen stabilen Stand des Fahrrads auch dann sicher, wenn das Fahrrad beispielsweise auf einem abschüssigen Untergrund in Fahrtrichtung bergab abgestellt worden ist.

Wenn die erwähnte Schwenkbewegung der Stütze 3 fortgeführt wird, gelangt das Druckstück 7 entlang der Führungskontur 8 in eine zweite Mulde, wie aus Fig. 3 ersichtlich, wobei diese zweite Mulde als Fahrmulde 17 bezeichnet ist. Diese Position der Stütze 3 wird als deren Fahrstellung bezeichnet. Auch die Fahrrmulde 17 weist 2 Kontaktflächen 15 auf, welche jeweils einen die Fahrmulde 17 begrenzenden Innenrand bzw. Außenrand bilden. Der Außenrand wird durch den Anschlag 6 geschaffen. Diesem Anschlag 6 liegt das Druckstück 7 mit einer Anschlagfläche 12 an, und ähnlich wie in der Standmulde 14 verläuft auch hier der Anschlag 6 im Wesentlichen parallel zur Längsachse der Stütze 3 bzw. zur Längsachse der Wendelfeder 9, und insbesondere im Wesentlichen quer zur Bewegungsrichtung, entlang welcher die Stütze 3 um die Schwenkachse 4 in die Fahrmulde 17 geschwenkt worden ist.

Rein schaubildlich ist in Fig. 3 gezeigt, dass die Stütze 3 nur annähernd, aber nicht vollständig in ihrer Fahrstellung angeordnet ist. Vielmehr ist die in Fig. 3 untere Flanke 11 des Druckstücks 7 im Abstand von ihrer zugeordneten Kontaktfläche 15 dargestellt. Es ist ersichtlich, dass durch die Beweglichkeit der Anschlagfläche 12 entlang dem Anschlag 6 das Druckstück 7 problemlos näher zur Schwenkachse 4 bewegt werden kann, bis die untere Flanke 11 an der ihr zugeordneten unteren Kontaktfläche 15 der Fahrmulde 17 anliegt. Ähnlich wie bei der Standmulde 14 verlaufen auch die Innen- und Außenränder der Fahrmulde 17 konisch zueinander, so dass durch die Wendelfeder 9 das Druckstück 7 spielfrei in seiner Fahrstellung gehalten wird und so einen klapperfreien Halt für die Stütze 3 am Sockel 2 während der Fahrt gewährleistet.

Aus den Fig. 2 und 3 ist ersichtlich, dass die Bewegungsrichtung, in welcher das Druckstück 7 durch die Wendelfeder 9 oder entgegen der Wendelfeder 9 beweglich ist, nicht radial auf die Schwenkachse 4 zu verläuft, sondern vielmehr dazu versetzt an der Schwenkachse 4 vorbei verläuft. In der Fahrstellung gemäß Fig. 3 verläuft diese Bewegungsrichtung des Druckstücks 7 unterhalb an der Schwenkachse 4 vorbei, und in Fig. 3, also in der Standstellung der Stütze 3, vor der Schwenkachse 4. Durch diese Ausgestaltung wird dem Benutzer des Fahrrads eine möglichst große Fußfreiheit ermöglicht, wenn sich die Stütze 3 in ihrer Fahrstellung befindet. Zudem ergibt sich dadurch, dass die Position der Stütze gegenüber der Schwenkachse weiter nach unten verlagert ist, ein größerer konstruktiver Freiraum für den Fahrradkonstrukteur oberhalb der Stütze 3, so dass dort ein Bauraum freigehalten wird, um beispielsweise Elemente einer elektrisch betätigten Gangschaltung, oder einer Hinterradbremse oder dergleichen unterzubringen.

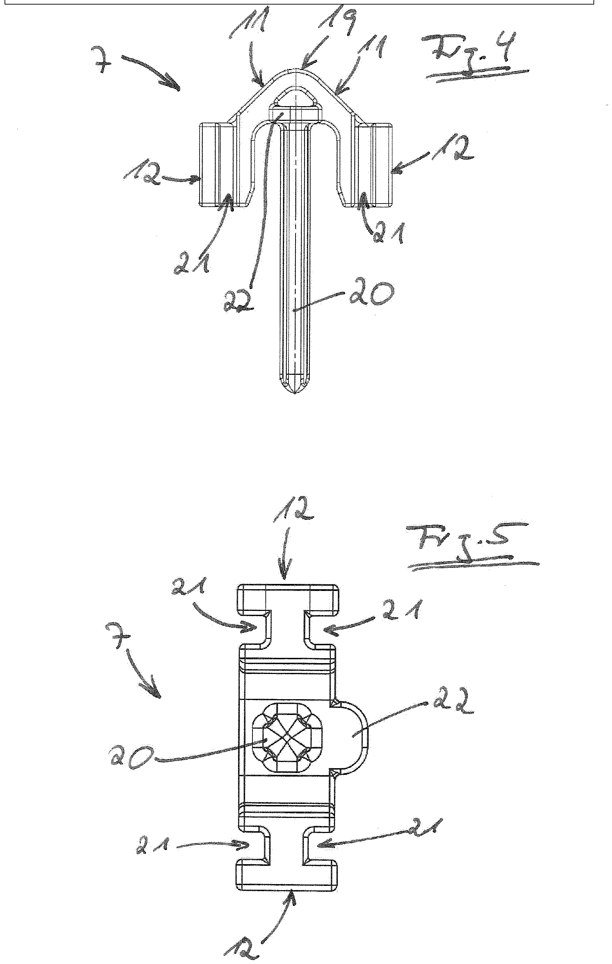

Fig. 4 zeigt eine seitliche Ansicht auf das Druckstück 7. Der Dorn 20 erstreckt sich sehr viel weiter nach unten, also von der Kuppe 19 weg, als die beiden Anschlagflächen 12, so das eine dementsprechend lange Wendelfeder 9 verwendet werden kann, die beispielsweise deutlich länger ist als schematisch in Fig. 2 angedeutet.

Fig. 5 zeigt eine Ansicht von unten auf das Druckstück 7. Dabei wird insbesondere deutlich, dass sich an die beiden Anschlagflächen 12 Nuten 21 anschließen. Diese wirken mit dazu komplementären Rippen innerhalb des Kopfes 18 zusammen, um das Druckstück 7 während Bewegungen entlang seiner Bewegungsrichtung zu führen.

Weiterhin zeigen die Fig. 4 und 5 eine Sicherungsnase 22, die am Druckstück 7 seitlich nach außen ragt. Die Sicherungsnase 22 begrenzt, wie weit das Druckstück 7 durch die Wendelfeder 9 vom Fuß 16 der Stütze 3 entfernt werden kann. Hierzu ist im Inneren des Kopfes 18 ein Vorsprung vorgesehen, der diese Bewegung begrenzt, indem die Sicherungsnase 22 zur Anlage an den Vorsprung kommt. Wenn beispielsweise die Stütze 3 vom Sockel 2 demontiert wird, verhindert die Sicherungsnase 22, dass das Druckstück 7 aufgrund der Federwirkung unkontrolliert aus dem Kopf 18 der Stütze 3 heraus geschossen werden kann.

### Bezugszeichen:

- 1: Fahrradständer
- 2: Sockel
- 2a: Abschnitt in erster Ebene (senkrecht)
- 2b: Abschnitt in zweiter Ebene (schräg)
- 3: Stütze
- 4: Schwenkachse
- 5: Vorderer Anschlag
- 6: Hinterer Anschlag
- 7: Druckstück
- 8: Führungskontur
- 9: Wendelfeder
- 10: Bein
- 11: Flanke
- 12: Anschlagfläche
- 14: Standmulde
- 15: Kontaktfläche
- 16: Fuß
- 17: Fahrmulde
- 18: Kopf
- 19: Kuppe
- 20: Dorn
- 21: Nut
- 22: Sicherungsnase

## Patentansprüche

1. Fahrradrahmen mit einem Fahrradständer (1),
mit einem als Sockel (2) bezeichneten ersten Element des Fahrradständers (1), welches als integraler Teil eines Fahrradrahmens ausgestaltet ist,
und mit einem zweiten Element des Fahrradständers (1) in Form einer am Sockel (2) schwenkbar gehaltenen Stütze (3),
die um eine Schwenkachse (4) zwischen zwei als Standstellung und als Fahrstellung bezeichneten Endstellungen beweglich ist,
wobei das zweite Element ein Druckstück (7) aufweist, mit
welchem es federbelastet einer Führungskontur (8) des ersten Elements anliegt und während der Schwenkbewe-
gung unterschiedlichen Stellen der Führungskontur (8) anliegt,
**dadurch gekennzeichnet,**
**dass** der Sockel (2) als Teil eines Ausfallendes ausgestaltet ist.

2. Fahrradrahmen nach Anspruch 1,
**dadurch gekennzeichnet,**
**dass** die Führungskontur (8) zwei Mulden aufweist, welche die beiden Endstellungen definieren,
die Mulden entlang der Führungskontur (8) durch zwei einander benachbarte jeweils konisch zueinander verlaufende Innenränder sowie zwei Außenränder begrenzt sind, derart, dass jeweils ein Außenrand einen Anschlag (5, 6) bildet, der eine Schwenkbewegung der Stütze (3) über die jeweilige Endstellung hinaus blockiert,
wobei der Außenrand im Wesentlichen parallel zur Bewegungsrichtung des Druckstücks (7) verläuft, und dass das Druckstück (7) die Mulden ausfüllend in der Art ausgestaltet ist, dass es durch die Feder belastet spielfrei in den konischen Sitz der jeweiligen Mulde gedrückt ist.

3. Fahrradrahmen nach Anspruch 1 oder 2,
**dadurch gekennzeichnet,**
**dass** die Bewegungsrichtung des Druckstücks (7) zu der Schwenkachse (4) versetzt verläuft.

4. Fahrradrahmen nach Anspruch 3,
**dadurch gekennzeichnet,**
**dass** Bewegungsrichtung des Druckstücks (7) zu der Schwenkachse (4) nach unten versetzt ist, wenn die Stütze (3) in der Fahrstellung angeordnet ist.

5. Fahrradrahmen nach einem der vorhergehenden Ansprüche,
**dadurch gekennzeichnet,**
**dass** ein erster Abschnitt (2a) des Ausfallendes in einer ersten, aufrechten Ebene verläuft
und eine zweiter Abschnitt (2b) des Ausfallendes die Führungskontur aufweist und in einer zweiten Ebene verläuft, die zu der ersten Ebene schräg abgewinkelt ist.

6. Fahrradrahmen nach einem der vorhergehenden Ansprüche,
**dadurch gekennzeichnet,**
**dass** der Sockel (2) als Blechzuschnitt ausgestaltet ist und die Stütze (3) einen Kopf (18) aufweist, der sich bis zu der Schwenkachse (4) erstreckt und gabelartig den Sockel (2) beidseitig umgreift.

7. Fahrradrahmen nach einem der vorhergehenden Ansprüche,
**dadurch gekennzeichnet,**
**dass** die Stütze (3) einen Kopf (18) aufweist, der sich bis zu der Schwenkachse (4) erstreckt,
und die das Druckstück (7) belastende Feder im Kopf (18) der Stütze (3) angeordnet ist.

8. Fahrradrahmen nach einem der vorhergehenden Ansprüche,
**dadurch gekennzeichnet,**
**dass** die das Druckstück (7) belastende Feder als Wendelfeder (9) ausgestaltet ist
und deren Mittelachse die Bewegungsrichtung des Druckstücks (7) definiert.

9. Fahrradrahmen nach einem der vorhergehenden Ansprüche,
**dadurch gekennzeichnet,**
**dass** das Druckstück (7) eine dachförmige Kuppe (19) aufweist, mit welcher es an der Führungskontur (8) entlang beweglich ist,
und zwei Anschlagflächen (12) aufweist, mit der es jeweils in einer Endstellung einem Anschlag (5, 6) der Führungskontur (8) anliegt.

10. Fahrradrahmen nach einem der vorhergehenden Ansprüche,
**dadurch gekennzeichnet,**
**dass** das Ausfallende zwei Teile aufweist, von denen eines die Führungskontur (8) aufweist.

11. Ausfallende, welches als integralen Teil des Ausfallendes einen Sockel (2) eines Fahrradständers (1) aufweist und welches dazu bestimmt ist, ein Ausfallende eines Fahrradrahmens nach einem der vorhergehenden Ansprüche zu bilden.

## Claims

1. Bicycle frame having a kickstand (1) that incorporates a first element that is referred to as a "mounting bracket" (2) and is designed to form an integral part of a bicycle frame and incorporates a second element in the form of a prop (3) that is held pivotably on the mounting bracket (2) and that can be shifted about a pivot (4) between two end positions that are referred to as the stand position and the travel position, where the second element incorporates a thrust member (7) by which the second element is held against a guide contour (8) of the first element under spring pressure and during the pivoting movement is held against different points on the guide contour (8), **characterised in that** the mounting bracket (2) is designed as part of a drop-out.

2. Bicycle frame in accordance with claim 1, **characterised in that** the guide contour (8) incorporates two recesses that define the two end positions, and the recesses along the guide contour (8) are delimited by two inner rims that are adjacent to each other and taper towards each other and two outer rims, in such a way that each outer rim forms a stop (5, 6) to stop the prop (3) from pivoting past whichever end position it has reached, where the outer rim extends essentially parallel to the direction of movement of the thrust member (7), and **in that** the thrust member is designed to fill out the recesses in such a way that it is thrust backlash-freely into the tapered seat of the respective recess under spring pressure.

3. Bicycle frame in accordance with claim 1 or 2, **characterised in that** the direction of movement of the thrust member (7) is not aligned with the pivot (4).

4. Bicycle frame in accordance with claim 3, **characterised in that,** when the prop (3) is arranged in the travel position, the direction of movement of the thrust member (7) is aligned downwards below the pivot (4).

5. Bicycle frame in accordance with any one of the foregoing claims, **characterised in that** a first part (2a) of the drop-out extends in a first, perpendicular plane and a second part (2b) of the drop-out incorporates the guide contour and extends in a second plane that is set at an oblique angle to the first plane.

6. Bicycle frame in accordance with any one of the foregoing claims, **characterised in that** the mounting bracket (2) is designed as a sheet metal blank and the prop (3) incorporates a head (18) that extends up to the pivot (4) and fits around the mounting bracket forkwise on both sides.

7. Bicycle frame in accordance with any one of the foregoing claims, **characterised in that** the prop (3) incorporates a head (18) that extends up to the pivot (4) and **in that** the spring that exerts pressure on the thrust member (7) is arranged in the head (18) of the prop (3).

8. Bicycle frame in accordance with any one of the foregoing claims, **characterised in that** the spring that exerts pressure on the thrust member (7) is designed as a spiral spring (9) and the middle axis of the coiled spring (9) determines the direction of movement of the thrust member (7).

9. Bicycle frame in accordance with any one of the foregoing claims, **characterised in that** the thrust member (7) incorporates a roof-shaped tip (19) by which it can be moved along the guide contour (8) and incorporates two stop faces (12) by which it rests against a stop (5, 6) of the guide contour (8) according to whichever end position it has reached.

10. Bicycle frame in accordance with any one of the foregoing claims, **characterised in that** the drop-out consists of two parts, one of which incorporates the guide contour (8).

11. Drop-out that incorporates a mounting bracket (2) of a bicycle kickstand (1) as an integral part of the drop-out and is designed to form a drop-out of a bicycle frame in accordance with any one of the foregoing claims.

## Revendications

1. Cadre de bicyclette comprenant un support (1) de bicyclette,
un premier élément du support (1) de bicyclette appelé socle (2), qui est configuré comme partie intégrante d'un cadre de bicyclette,
et comprenant un deuxième élément du support (1) de bicyclette ayant la forme d'une béquille (3) maintenue contre le socle (2) tout en pouvant pivoter, béquille qui est déplaçable autour d'un axe de pivotement (4) entre deux positions finales appelées position d'arrêt et position de conduite, sachant que le deuxième élément présente une pièce de compression (7), avec laquelle il applique sous contrainte ressort contre un contour de guidage (8) du premier élément, et applique pendant le mouvement de pivotement en différents endroits du contour de guidage (8), **caractérisé en ce que** le socle (2) est configuré comme faisant partie d'une extrémité de fourche.

2. Cadre de bicyclette selon la revendication 1, **caractérisé en ce que** le contour de guidage (8) présente deux creux qui définissent les deux positions finales, que les creux sont limités, le long du contour de guidage (8), par deux bords intérieurs réciproquement voisins présentant un tracé respectivement conique en direction l'un de l'autre, ainsi que par deux bords extérieurs, de sorte que chaque bord extérieur respectif forme une butée (5, 6) bloquant un mouvement pivotant de la béquille (3) au-delà de la position finale respective, sachant que le bord extérieur présente un tracé essentiellement parallèle à la direction du mouvement de la pièce de compression (7), et que la pièce de compression (7) est configurée pour remplir les creux de façon à ce que sous la contrainte ressort elle soit poussée sans jeu dans le siège conique du creux respectif.

3. Cadre de bicyclette la revendication 1 ou 2, **caractérisé en ce que** la direction du mouvement de la pièce de compression (7) présente un tracé décalé par rapport à l'axe de pivotement (4).

4. Cadre de bicyclette la revendication 3, **caractérisé en ce que** la direction du mouvement de la pièce de compression (7) est décalée vers le bas par rapport à l'axe de pivotement (4) lorsque la béquille (3) se trouve en position de conduite.

5. Cadre de bicyclette selon l'une des revendications précédentes, **caractérisé en ce qu'**un premier segment (2a) de l'extrémité de fourche présente un tracé situé dans un premier plan redressé et qu'un deuxième segment (2b) de l'extrémité de fourche présente le contour de guidage et présente un tracé sur un deuxième plan formant un angle d'inclinaison par rapport au premier plan.

6. Cadre de bicyclette selon l'une des revendications précédentes, **caractérisé en ce que** le socle (2) est configuré en forme de tôle découpée au format et que la béquille (3) présente une tête (18) s'étendant jusqu'à l'axe de pivotement (4) et entourant le socle (2) des deux côtés comme une fourche.

7. Cadre de bicyclette selon l'une des revendications précédentes, **caractérisé en ce que** la béquille (3) présente une tête (18) s'étendant jusqu'à l'axe de pivotement (4), et que le ressort maintenant la pièce de compression (7) sous contrainte est disposé dans la tête (18) de la béquille (3).

8. Cadre de bicyclette selon l'une des revendications précédentes, **caractérisé en ce que** le ressort maintenant la pièce de compression (7) sous contrainte est configuré en ressort hélicoïdal (9) dont l'axe médian définit la direction du mouvement de la pièce de compression (7).

9. Cadre de bicyclette selon l'une des revendications précédentes, **caractérisé en ce que** la pièce de compression (7) présente un sommet (19) en forme de toit, sommet avec lequel elle se déplace le long du contour de guidage (8), et présente deux surfaces (12) de butée par lesquelles elle applique, en position finale respective, contre une butée (5, 6) du contour de guidage (8).

10. Cadre de bicyclette selon l'une des revendications précédentes, **caractérisé en ce que** l'extrémité de fourche présente deux parties, dont l'une présente le contour de guidage (8).

11. Extrémité de fourche, qui, en tant que partie intégrante de l'extrémité de fourche, présente un socle (2) d'un support de bicyclette (1) et sert à former une extrémité de fourche d'un cadre de bicyclette selon l'une des revendications précédentes.
